(19) **Europäisches Patentamt / European Patent Office / Office européen des brevets**

(11) **EP 0 959 368 B1**

(12) **EUROPEAN PATENT SPECIFICATION**

(45) Date of publication and mention
of the grant of the patent:
**05.11.2008 Bulletin 2008/45**

(51) Int Cl.:
*G01S 7/52* (2006.01)    *G10K 11/34* (2006.01)

(21) Application number: **99112801.8**

(22) Date of filing: **23.05.1994**

(54) **Bandwidth sampling technique for digital focusing in array imaging systems**

Technik zur Abtastung der Bandbreite zur digitalen Fokussierung in Abbildungssystemen mit Gruppenanordnung

Technique d'échantillonage de bande pour focalisation totale dans les systèmes d'imagerie à groupement de transducteurs

(84) Designated Contracting States:
**CH DE FR GB IT LI**

(30) Priority: **24.05.1993 KR 9308944**

(43) Date of publication of application:
**24.11.1999 Bulletin 1999/47**

(62) Document number(s) of the earlier application(s) in accordance with Art. 76 EPC:
**94915699.6 / 0 657 034**

(73) Proprietor: **MEDISON CO., LTD.**
**Kangwon-do 250-870 (KR)**

(72) Inventors:
• **Chang,Seong Ho,**
**603-906 Ssangyong Apt,Purunmaul 77**
**Kyunggi-do, 463-020 (KR)**
• **Park, Song Bai,**
**3-203 Woosung Apt., 101-1,**
**Seoul 138-227, (KR)**

(74) Representative: **Geary, Stuart Lloyd et al**
**Venner Shipley LLP**
**20 Little Britain**
**London EC1A 7DH (GB)**

(56) References cited:
**US-A- 4 290 127**        **US-A- 4 837 578**

• **SEONG HO CHANG ET AL: "PHASE-ERROR-FREE QUADRATURE SAMPLING TECHNIQUE IN THE ULTRASONIC B -SCAN IMAGING SYSTEM AND ITS APPLICATION TO THE SYNTHETIC FOCUSING SYSTEM" IEEE TRANSACTIONS ON ULTRASONICS, FERROELECTRICS AND FREQUENCY CONTROL, vol. 40, no. 3, 1 May 1993 (1993-05-01), pages 216-223, XP000382840 ISSN: 0885-3010**
• **JOO HAN KIM ET AL: "Pipelined sampled-delay focusing in ultrasound imaging systems" ULTRASONIC IMAGING, APRIL 1987, USA, vol. 9, no. 2, pages 75-91, XP002113987 ISSN: 0161-7346**
• **PRIDHAM R G ET AL: "Digital interpolation beamforming for low-pass and bandpass signals" PROCEEDINGS OF THE IEEE, JUNE 1979, USA, vol. 67, no. 6, pages 904-919, XP002113988 ISSN: 0018-9219**
• **TAI K SONG ET AL: "A NEW DIGITAL PHASED ARRAY SYSTEM FOR DYNAMIC FOCUSING AND STEERING WITH REDUCED SAMPLING RATE" ULTRASONIC IMAGING, vol. 12, no. 1, 1 January 1990 (1990-01-01), pages 1-16, XP000125528 ISSN: 0161-7346**
• **MUCCI R A: "A COMPARISON OF EFFICIENT BEAMFORMING ALGORITHMS" IEEE TRANSACTIONS ON ACOUSTICS, SPEECH AND SIGNAL PROCESSING, vol. ASSP-32, no. 3, 1 June 1984 (1984-06-01), pages 548-558, XP002030176**
• **CASTELLINI G ET AL: "REAL-TIME DIGITAL DYNAMIC FOCUSING SYSTEM" ULTRASONICS, vol. 28, no. 2, 1 March 1990 (1990-03-01), pages 124-126, XP000115773 ISSN: 0041-624X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to an ultrasonic imaging system.

Generally, in an ultrasonic imaging system, an ultrasonic pulse signal is transmitted toward an object to be imaged, reflected from a surface of acoustic impedance discontinuity of the object, and received by an array transducer. The received signals are then converted into electric signals which are displayed on a video after various processing. The resulting image conveys some information of the characteristics of the object being examined. In this case, the use of a short pulse increases the signal resolution and the use of an array obtains focusing capability to improve lateral resolution. In the past, there have been various methods to improve the resolution, in particular, the lateral resolution.

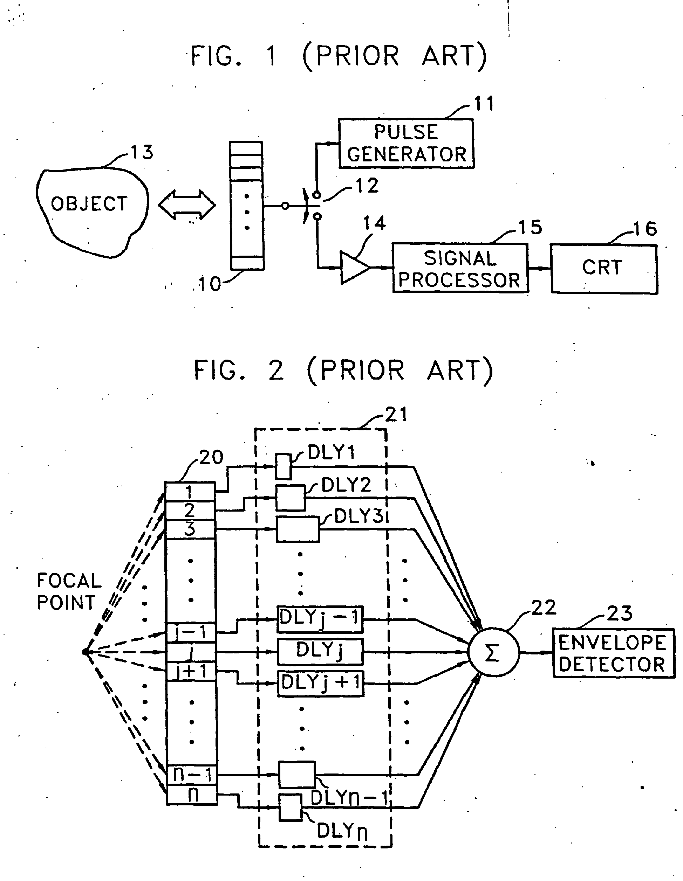

Figure 1 is a schematic block diagram of a conventional ultrasonic imaging system. An ultrasonic pulse signal generated from a pulse generator 11 is supplied to an array transducer 10 via switch 12. The array transducer 10 converts an electric pulse signal into an ultrasonic signal and provides the converted signal to an object 13 to be imaged. Then, the ultrasonic signal is reflected from an acoustic impedance discontinuous surface of the object 13 and the reflected signal is again received by the array transducer 10. At this time, in a case where there are a plurality of acoustic impedance discontinuous surfaces, the ultrasonic signal is in turn reflected from each of discontinuous surfaces and is supplied to a number of transducer elements. The array transducer 10 is composed of a plurality of transducer elements. The ultrasonic signal supplied to the array transducer 10 is converted by transducer elements into an electric signal with a magnitude proportional to an intensity of the ultrasonic signal. The electric signal is amplified to the predetermined magnitude in an amplifier 14 via switch 12, processed to a video signal in a signal processors 15, and transmitted to a cathode ray tube (CRT) 16.

In such an ultrasonic imaging system, the array transducer of a probe is composed of a plurality of transducer elements in the array form. This array form improves the resolution of a picture to be displayed with focusing an ultrasonic signal. Ultrasonic signals, which are reflected from the object and supplied to the array transducer, reach the transducer elements at different times according to the positions of respective transducer elements. That is, the farther their positions are from the middle of the array transducer 10, the amount of time increases. Even if signal focusing can be performed at a transmission focusing step of transmitting the ultrasonic signal from the array transducer 10 to the object, it is preferred that signal focusing occur at a receiving focusing step, capable of dynamic focusing, rather than the former step. In receiving focusing, differences between reach times should be respectively compensated after delayed, so as to focus electric signals output from the transducer elements.

Figure 2 illustrates one embodiment of a conventional receiving focusing device of an ultrasonic signal. The device of Figure 2 utilizes analog delayers. An array transducer 20 is composed of n transducer elements in numbers, in which receiving signals converted into electric signals by each of transducer elements are supplied to n delayers DLY1~DLYn, respectively. Among ultrasonic signals reflected from an object and supplied to the array transducer 20, each of delayers DLY1~DLYn allows the longest delay time to an output signal of the middle transducer element with the shortest reach time and permits the shortest delay time to input signals of first and n transducer elements with the longest reach time. Therefore, the delayers DLY1-DLYn simultaneously output the delayed signals therein to an adder 22. The signals output from the respective delayers are added in the adder 22 and outputted as a focusing signal. The conventional device of Figure 2 connects the delayers, having a predetermined delay time value, to output terminals of each of transducer elements and delays the output signal from the transducer elements. Thus, each of delayers DLY1~DLYn compensates for differences of reach time to the transducer elements of the ultrasonic signals reflected from the object. An output signal from the adder 22 is supplied to an envelope detector 23. However, in order to reduce error during compensating of delay time, the conventional device of Figure 2 employs a plurality of taps in delayers. As such, such a device requires complicated hardware. Also, in the case of dynamic focusing, the delay time of each delayer should be changed. Accordingly, the more the number of focal points increases, the more complicated hardware becomes. Moreover, impedance mismatching causes a reduction of dynamic focusing range and a decrease of resolution therefrom.

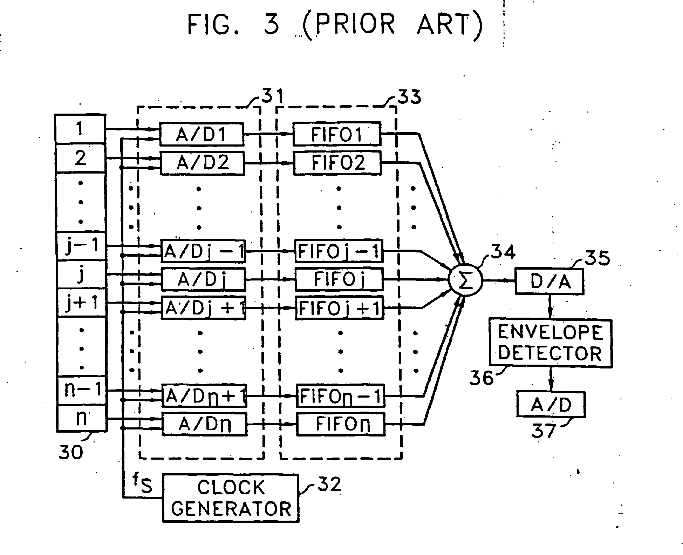

Figure 3 illustrates another embodiment of a conventional receiving focusing device of an ultrasonic signal. The device of Figure 3 utilizes what is called pipelined sampled delay focusing (PSDF). In the device of Figure 3, an array transducer 30 is composed of n transducer elements in numbers. Received ultrasonic signals are converted into electric signals by each of transducer elements. The electric signals output from transducer elements of the array transducer 30 are respectively supplied to n analog to digital converters A/D1~A/Dn of an analog to digital converting unit 31. A clock generator 32 generates sampling clocks of a frequency "fs". The A/D converting unit 31 converts each of electric signals which are input form the transducer elements according to the sampling clock into digital signals, and supplies the converted signal to memories FIFO1~FIFOn, respectively. The sampling clock of the clock generator 32 is not a uniform clock, but a variable sampling clock. That is, in the case of the dynamic focusing, the reach time of the ultrasonic signal is different from each other according to positions of each focal point. Output terminals of the A/D converting unit 31 are connected to a memory unit 33 composed of first-in-first-out memories FIFO1~FIFOn. Output data of the A/D converting unit 31 is arranged within the memory unit 33, to be output in input order. Therefore, the ultrasonic signals, which are reflected from a particular focal point and supplied to transducer elements, can be simultaneously output from the memory unit 33. After initial data corresponding to a specific focal point is supplied to the memory unit 33 and a maximum delay time goes by, data is simultaneously output from the memory unit 33. The output data is added in an adder 34, and then dynamic focusing is performed. The focused ultrasonic signal is converted into an analog signal by digital-to-analog converter 35 and the converted signal is supplied to an envelope detector 36. The envelope detector 36 detects an envelope from the input signal, and an analog-to-digital converter 37 converts the detected envelope into a digital signal.

Using such a technique, it is advantageous that the conventional device can obtain the best resolution by focusing an ultrasonic signal on all focal points requiring the dynamic focusing. However, it is disadvantageous that the level of a sampling frequency becomes high because the A/D converting unit 31 samples a radio frequency signal. For instance, in the case of an array transducer of 3.5MHz, a sampling frequency is required beyond 28MHz. Therefore, such a system suffers from the problem of noise due to high sampling frequencies of A/D conversion. Furthermore, a problem with relatively expensive costs is encountered because both memories and peripheral circuits with a high speed device should be employed. In addition, since a final signal required in an ultrasonic video device is an envelope of a focused RF signal, not the focused RF signal, the detection of the envelope should be executed. However, it is difficult to detect the envelope from digital data which is sampled to a high frequency beyond 28MHz. So, as shown in Figure 3 the envelope detection should be executed after converting the focused digital RF data into analog data again. Accordingly, new noise may occur in a process of D/A conversion.

In order to solve the above problems, EP-A-0224014 and US-A-4155259 disclose lowering the frequency and of output signals from transducer elements using bandwidth sampling methods. Signals with a low frequency band are converted into digital signals by A/D conversion using a sampling frequency beyond the bandwidth. The converted digital signals are focused through memory, and then envelope data of each of focal points is detected by an envelope detector. US-A-4155259 further discloses a quadrature processing method.

FR-A-2680250 also discloses a multiplexed quadrature processing method. This method employs phase compensation means comprising multipliers and adders to complex multiply the in-phase and quadrature signals with complex coefficients.

"A new Digital Phased Array System for Dynamic Focusing and Steering with Reduced Sampling Rate", Tai K. Song et al, Ultrasonic Imaging, Vol 12, No 1, January 1990, pages 1-16 discloses an ultrasonic imaging system having an array of transducers, in which the sampling rate is reduced by using a quadrative sampling method to reduce the bandwidth.

US4,290,127 discloses a beamformer for use with an array of sonar transducers in which the transducer signals are translated to a lower frequency and a phase shift is applied which is dependent on the frequency of a reference signal and the magnitude of a delay applied to each transducer signal.

According to the present invention, there is provided an ultrasonic imaging system comprising: a plurality of ultrasonic transducer elements for receiving ultrasonic echo signals, frequency translation means for translating signals from the transducer elements to in-phase and quadrature baseband signals using first and second reference signals, focusing means for bringing the baseband signals from all the transducer elements into temporal alignment by eliminating ultrasonic signal path delay time differences, phase compensating means for compensating for phase errors in the baseband signals introduced by the frequency translation means, adding means for respectively adding in-phase and quadrature components output by the phase compensating means, and an envelope detector for detecting envelope data from the outputs of the adding means, wherein the phase compensating means comprises: a first multiplier for multiplying an in-phase component output by the focusing means with a third reference signal; a second multiplier for multiplying said in-phase component with a fourth reference signal; a third multiplier for multiplying the quadrature component, corresponding to said in-phase component, output by the focusing means with the third reference signal; a fourth multiplier for multiplying said quadrature component with the fourth reference signal; a subtracter for subtracting the output from the fourth multiplier from the output of the first multiplier to produce an output signal for application to the adding means; and an adder for adding the outputs of the second multiplier and the third multiplier to produce an output signal for application to the adding means; the third and fourth reference signals being of the form $\sin(-\omega_r m_{jk} T_s)$ and of the form $\cos(-\omega_r m_{jk} T_s)$ respectively, where $\omega_r$ is the frequency of the first and second reference signals, $m_{jk}$ is the difference in the path delay for the transducer element for which the compensation is being applied and that of the element for which the path to the focal point is shortest and $T_s$ is the sampling period of the analogue-to-digital converters.

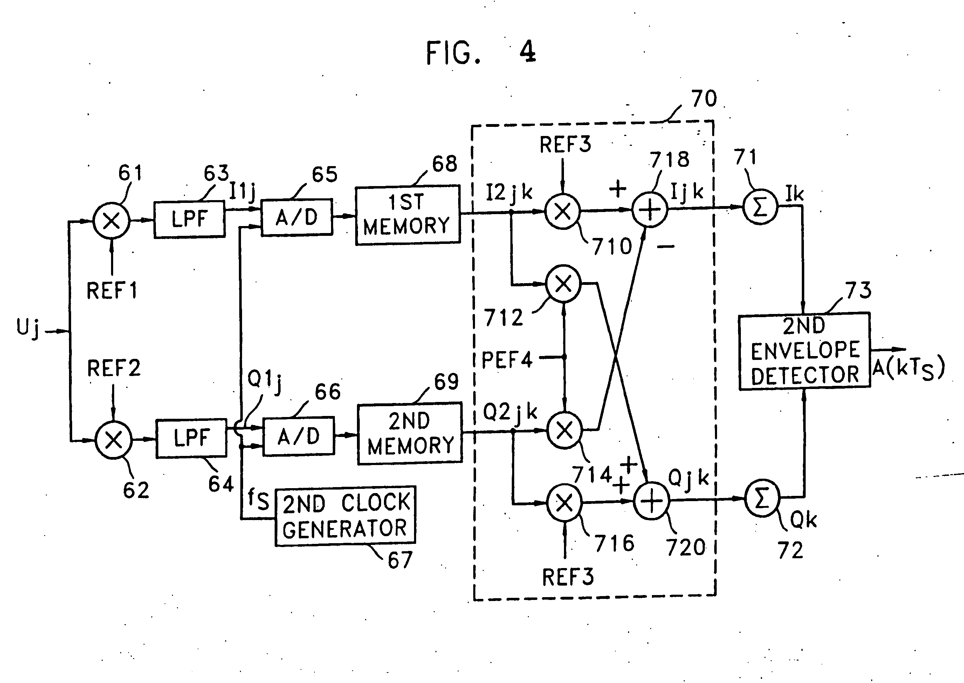

An embodiment of the present invention will now be described, by way of example, with reference to Figure 4 of the accompanying drawings, in which:

Figure 1 is a schematic block diagram of a conventional ultrasonic imaging system.
Figure 2 is a block diagram illustrating one embodiment of a conventional receiving focusing device of an ultrasonic signal.
Figure 3 is a block diagram illustrating another embodiment of a conventional receiving focusing device of an ultrasonic signal.

Figure 4 is a block diagram illustrating a preferred embodiment of an ultrasonic imaging system for focusing a digital signal in accordance with the present invention.

Figure 4 relates to a focusing system of an ultrasonic signal received through an array transducer (not shown) composed of n transducer elements. The system of Figure 4 shows only the focusing of an ultrasonic signal being input through any one of the transducer elements because the same procedure for focusing is applied to each of the n ultrasonic signals transformed into electric signals. The system of Figure 4 includes a frequency band transformer composed of a multiplier 61 or 62 and low pass filter 63 or 64. In addition, first and second A/D converters 65 and 66, and a second clock generator 67 form a delayed-time difference eliminator. An output signal ($U_i$) of the "$j^{th}$" transducer element is supplied to the first multiplier 61 and the second multiplier 62. Either first multiplier 61 or second multiplier 62 multiplies an output signal of the transducer element with a first reference signal REF1 or a second reference signal REF2, and supplies the multiplied value to a first low pass filter 63 or a second low pass filter 64. Output terminals of the first and second low pass filters 63 and 64 are connected to input terminals of the first and second A/D converters 65 and 66, respectively. The first and second A/D converters 65 and 66 convert the input signal into a digital signal according to a sampling frequency $f_s$ supplied from the second clock generator 67, and outputs the converted signal to first and second memories 68 and 69. The first and second memories 68 and 69 store the output from the A/D converter, and output the stored data. A phase compensator 70 includes third through sixth multipliers 710~716 which multiply the output signal from the first and second memories 68 and 69 by a third reference signal REF3 or a fourth reference signal REF4, a substracter 718 which subtracts the output of a fifth multiply 714 from that of a third multiply 710, and a third adder 720 which adds the output of fourth and sixth multiplies 712 and 716. The output of the phase compensator 70 is supplied to fourth and fifth adders 71 and 72. The fourth and fifth adders 71 and 72 sum output signals of all the phase compensator corresponding to a predetermined number of transducer elements (not shown), and supply the summed value to a second envelope detector 73.

The embodiment of Figure 4 relates to the focusing system of an ultrasonic signal using a quadrature sampling method and its operation will now be described in detail.

The quadrature sampling method moves reflected ultrasonic signals from the radio frequency (RF) band to baseband using a predetermined number of multipliers and low pass filters, and samples them. Accordingly, it is advantageous that the envelope of reflected ultrasonic signals can be easily obtained if a sampling frequency comes to be maintained beyond the bandwidth of reflected ultrasonic signals. First, the ultrasonic signal U(t) received from the transducer element is represented by the equation (18).

$$U(t) = A(t)\cos(\omega_0 t + \theta(t))$$
$$A(t)\cos\omega_0 t - A_0(t)\sin\omega_0 t \tag{1}$$

Where, $A_I(t)$ is the inphase term of the signal U(t), and $A_q(t)$ is the quadrature term of U(t). Accordingly, from the equation (1) an ultrasonic signal $U_j(t)$ supplied to the "$j^{ih}$" transducer element of the array transducer 40 is represented below.

$$U_j(t - \tau_j) = A_j(t - \tau_j)\cos(\omega_o(t - \tau_j) + \theta(t - \tau_j))$$
$$= A_{jI}(t - \tau_j)\cos\omega_0(t - \tau_j) - A_{jQ}(t - \tau_j)\sin\omega_0(t - \tau_j) \tag{2}$$

Here, "$\tau_j$" means delay time of the "$j^{th}$" transducer element with respect to the transducer element in the middle of the array transducer. Such a reflected ultrasonic signal $U_i$ is supplied to the first multiplier 61 and multiplied by a first reference signal REF1 of "$\cos\omega_r t$", and at the same time is supplied to the second multiplier 62 and multiplied by a second reference signal REF2 of "$\sin\omega_r t$". Here, "$\omega_r$" is a reference frequency used in the first and second multiplier 61 and 62. The signals, which are multiplied by each of reference signals in the first and second multipliers 61 and 62, have no high frequency components through the first and second low pass filters 63 and 64, and are expressed by the equations (3) and (4).

$$I1_j = U_j(t - \tau_i) \cos \omega_r t \big|_{LPF}$$

$$= \frac{1}{2} A_{jl}(t - \tau_i) \cos\left[(\omega_0 - \omega_r)t - \omega_0 \tau_j\right] \tag{3}$$

$$- \frac{1}{2} A_{jQ}(t - \tau_i) \sin\left[(\omega_0 - \omega_r)t - \omega_0 \tau_j\right]$$

$$Q1_j = X_j(t - \tau_i) \sin \omega_r t \big|_{LPF}$$

$$= \frac{1}{2} A_{jl}(t - \tau_i) \sin\left[(\omega_0 - \omega_r)t - \omega_0 \tau_j\right] \tag{4}$$

$$- \frac{1}{2} A_{jQ}(t - \tau_i) \cos\left[(\omega_0 - \omega_r)t - \omega_0 \tau_j\right]$$

Where, high frequency components, that is, the frequency addition term of "$(\omega_0 + \omega_r)$t" is removed. Consequently, the signal passing through the multiplier 61 or 62 and the low pass filter 63 or 64 is moved from the RF band to baseband. The two signals ($I1_j$, $Q1_j$) represented by the equations (3) and (4) are separately supplied to the first and second A/D converters 65 and 66. The first and second A/D converters 65 and 66 sample the input signal according to the sampling frequency $f_s$ signal supplied form the second clock generator 67. The second clock generator 67 generates a sampling clock of the sampling frequency $f_s$ more than the bandwidth of reflected and received ultrasonic signals. The second clock generator 67 provides for different sampling times for different pairs of A/D converters, corresponding to each of the transducer elements, in order to compensate for the differences in delay time in (i.e. path length for) the signals supplied to each of the transducer elements. Therefore, pairs of A/D converters corresponding to each of the transducer elements output the digital signals in which the differences of the delay time occurring between signals received from the array transducer are compensated. The first and second A/D converters 65 and 66 output the digital signals obtained through sampling to the first and second memories 68 and 69. Memories (not shown) corresponding to other transducer elements as well as the memories 68 and 69 corresponding to the "jth" transducer element, in the case that initial data with respect to a particular focal point is input therein, store the input data until the maximum delay time of hte focal point goes by.

After the lapse of the maximum delay time, the memories output, in order, the stored data to the adding unit 45. A signal $I2_{jk}$ supplied from the first memory 68 to the third and fourth multipliers 710 and 712, and a signal $Q2_{jk}$ supplied from the second memory 69 to the fifth and sixth multiplies 714 and 716 are as follows.

$$I2_{jk} = \frac{1}{2} A_{jl}\left[kT_s - \left(\tau_j - m_{jk}T_s\right)\right] \cos\left[(\omega_0 - \omega_r)kT_s - \omega_0\left(\tau_j - m_{jk}T_s\right) - \omega_r m_{jk}T_s\right]$$
$$- \frac{1}{2} A_{jQ}\left[kT_s - \left(\tau_j - m_{jk}T_s\right)\right] \sin\left[(\omega_0 - \omega_r)kT_s - \omega_0\left(\tau_j - m_{jk}T_s\right) - \omega_r m_{jk}T_s\right] \tag{5}$$

$$Q2_{jk} = \frac{1}{2} A_{jl}\left[kT_s - \left(\tau_j - m_{jk}T_s\right)\right] \sin\left[(\omega_0 - \omega_r)kT_s - \omega_0\left(\tau_j - m_{jk}T_s\right) - \omega_r m_{jk}T_s\right]$$
$$- \frac{1}{2} A_{jQ}\left[kT_s - \left(\tau_j - m_{jk}T_s\right)\right] \cos\left[(\omega_0 - \omega_r)kT_s - \omega_0\left(\tau_j - m_{jk}T_s\right) - \omega_r m_{jk}T_s\right] \tag{6}$$

Where, "k" shows "k" sampling position, "$T_s$" is a sampling period, and "$m_{jk}$" is the difference between the "jth" transducer element and the middle transducer elements with the shortest delay time. Therefore, the "$m_{jk}$" should be selected such that "$m_{jk}T_s \approx \tau_j$". Envelope data is compensated for the differences between delay times by adding either a signal $I_k$ or a signal $Q_k$ with respect to all the transducer elements in order to obtain envelope data at "k" focal point. However, since "$\omega_r m_{jk}T_s$" included in the phase terms has a different "$m_{jk}$" for each of the transducer elements, phase difference errors may occur. In order to solve the problem, the present invention includes the phase compensator 70, connected between memories and adders, for compensating phase errors. First, the equations (5) and (6) can be simply represented as follows:

$$B_{jI}(k) = \frac{1}{2} A_{jI} \left[ kT_s - (\tau_j - m_{jk}T_s) \right] \qquad (7)$$

$$B_{jQ}(k) = \frac{1}{2} A_{jQ} \left[ kT_s - (\tau_j - m_{jk}T_s) \right] \qquad (8)$$

$$\theta = (\omega_0 - \omega_r)kT_s - \omega_0(\tau_j - m_{jk}T_s) \qquad (9)$$

$$\psi_{jk} = -\omega_r m_{jk}T_s \qquad (10)$$

The equations (5) and (6) can be indicated as follows using the equations (7) and (8).

$$I2_{jk} = B_{jI}(k)\cos(\theta + \psi_{jk}) - B_{jQ}(k)\sin(\theta + \psi_{jk}) \qquad (11)$$

$$Q2_{jk} = -B_{jI}(k)\sin(\theta + \psi_{jk}) - B_{jQ}(k)\cos(\theta + \psi_{jk}) \qquad (12)$$

In "$\psi_{jk} = -\omega_r m_{jk}T_s$" utilised for the phase compensation, since "$\omega_r$" and "$T_s$" are known values, "$m_{jk}$" is variable according to focal points but can be anticipated, and "$\psi_{jk}$" can be calculated from previously known values ($\omega_r$, $T_s$, $m_{jk}$). Accordingly, the phase compensation is possible by using a "$\psi_{jk}$" value added to the third and fourth reference signals REF3 and REF4 which are supplied to the third to sixth multipliers 710~716. The third multiplier 710 multiplies a signal $I2_{jk}$ supplied from the first memory 68 and the third reference signal REF3 of the form "cos $\psi_{jk}$", and outputs the multiplied value to a substracter 718. The fourth multiplier 712 multiplies the signal $I2_{jk}$ supplied from the first memory 68 and the fourth reference signal REF4 of the form "sin $\psi_{jk}$", and outputs the multiplied value to a third adder 720. The fifth multiplier 714 multiplies a signal $Q2_{jk}$ supplied from the second memory 69 and the fourth reference signal REF4 of the form "sin $\psi_{jk}$", outputs the multiplied value to the subtracter 718. The sixth multiplier 716 multiplies the signal $Q2_{jk}$ supplied from the second memory 69 and the third reference signal REF3 of the form "cos $\psi_{jk}$", outputs the multiplied value to the third adder 720. The subtracter 718 subtracts the fifth multiplier 714 from the output signal of the third multiplier 710, and outputs the subtracted value to the fourth adder 71. The third adder 720 adds the outputs signals of the fourth and sixth multipliers 712 and 716, and outputs the added value to the fifth adder 72. Then, the output signals $I_{jk}$ and $Q_{jk}$ of the subtracter 718 and third adder 720 have no phase errors $\psi_{jk}$ by means of the computation of the third to sixth multipliers 710~716, subtracter 718 and third adder 720, which is represented by the following equations.

$$\begin{aligned} I_{jk} &= I2_{jk}\cos\psi_{jk} - Q2_{jk}\sin\psi_{jk} \\ &= B_{jI}(k)\cos\theta - B_{jQ}(k)\sin\theta \end{aligned} \qquad (13)$$

$$\begin{aligned} Q_{jk} &= I2_{jk}\sin\psi_{jk} + Q2_{jk}\cos\psi_{jk} \\ &= -B_{jI}(k)\sin\theta - B_{jQ}(k)\cos\theta \end{aligned} \qquad (14)$$

The signals in which phase errors are removed by the phase compensator 70 are added to each of the outputs signals of the phase compensators (not shown) corresponding to the other transducer elements in fourth and fifth adders 71 and 72, and are focused as follows.

$$I_k = \sum_j I_{jk} \qquad (15)$$

$$Q_k = \sum_j Q_{jk} \qquad (16)$$

An envelope detector 73, which receives two components, i.e. in-phase and quadrature, focused according to the equations (15) and (16), detects the envelope "$A(kT_s)$" according to the equation (17).

$$A(kT_s) = (I_k^2 + Q_k^2)^{\frac{1}{2}} \qquad (17)$$

The system of Figure 4 can be applied to synthetic focusing method as well as the above PSDF method.

As described above, a digital focusing method and system in accordance with the present invention, even if an ultrasonic signal is focused by the digital method, solves a high sampling frequency and the difficulty of envelope detection in a digital process, using both analytic signal sampling and quadrature sampling among bandwidth sampling methods. The present invention reduces complexity of a focusing system and makes dynamic focusing possible, and thereby has an effect on the ease of envelope detection.

An ultrasonic can be utilized in a medical diagnosis, non-destruction inspection, underwater investigation, etc.

The present invention can be applied to imaging systems using any type of array transducers including linear, phased, convex, concave and annular arrays. The present invention can be applied to any imaging modelity in which the analytic signal can be effectively utilized, including B,C and M mode images, for flow measurement, phase aberration correction, tissue characterization, etc.

## Claims

1.  An ultrasonic imaging system comprising:

    a plurality of ultrasonic transducer elements for receiving ultrasonic echo signals, frequency translation means (61, 62, 63, 64) for translating signals ($U_j$) from the transducer elements to in-phase and quadrature baseband signals ($I_{1j}$, $Q_{1j}$) using first and second reference signals (REF1, REF2),
    focusing means (65, 66, 67, 68, 69) for bringing the baseband signals from all the transducer elements into temporal alignment by eliminating ultrasonic signal path delay time differences,
    phase compensating means for compensating for phase errors in the baseband signals introduced by the frequency translation means,
    adding means for respectively adding in-phase and quadrature components output by the phase compensating means, and
    an envelope detector for detecting envelope data from the outputs of the adding means,
    wherein the phase compensating means comprises:

    a first multiplier (710) for multiplying an in-phase component output by the focusing means with a third reference signal (REF3);
    a second multiplier (712) for multiplying said in-phase component with a fourth reference signal (REF4);
    a third multiplier (716) for multiplying the quadrature component, corresponding to said in-phase component, output by the focusing means with the third reference signal (REF3);
    a fourth multiplier (714) for multiplying said quadrature component with the fourth reference signal (REF4);
    a subtracter (718) for subtracting the output from the fourth multiplier from the output of the first multiplier to produce an output signal for application to the adding means (71); and
    an adder (720) for adding the outputs of the second multiplier and the third multiplier to produce an output signal for application to the adding means (72);
the third and fourth reference signals being of the form $\sin(-\omega_r m_{jk} T_s)$ and of the form $\cos(-\omega_r m_{jk} T_s)$ respectively, where $\omega_r$ is the frequency of the first and second reference signals, $m_{jk}$ is the difference in the path delay for the transducer element for which the compensation is being applied and that of the element for which the path to the focal point is shortest and $T_s$ is the sampling period of the analogue-to-digital converters.

**Patentansprüche**

1. Ultraschallabbildungssystem, umfassend:

eine Vielzahl von Ultraschall-Wandlerelementen zum Empfangen von Ultraschall-Echosignalen,
Frequenzumsetzungsmittel (61, 62, 63, 64) zum Umsetzen von Signalen ($U_j$) von den Wandlerelementen in Inphasen- und Quadratur-Basisbandsignale ($I1_j$, Q1j) unter Verwendung erster und zweiter Referenzsignale (REF1, REF2),
Fokussierungsmittel (65, 66, 67, 68, 69) zum Bringen der Basisbandsignale von allen Wandlerelementen in temporale Ausrichtung durch Eliminieren von Ultraschallsignalweg-Verzögerungszeitdifferenzen,
Phasenkompensationsmittel zum Kompensieren von Phasenfehlern in den Basisbandsignalen, die durch die Frequenzumsetzungsmittel eingeführt werden,
Addiermittel zum Addieren von jeweils der Inphasen- und Quadraturkomponente, die von dem Phasenkompensationsmittel ausgeben werden, und
einen Hüllkurvendetektor zum Detektieren von Hüllkurvendaten von den Ausgaben des Addiermittels,
wobei das Phasenkompensationsmittel umfasst:

einen ersten Multiplikator (710) zum Multiplizieren einer Inphasen-Komponente, die von dem Fokussierungsmittel ausgegeben wird, mit einem dritten Referenzsignal (REF3);
einen zweiten Multiplikator (712) zum Multiplizieren der Inphasen-Komponente mit einem vierten Referenzsignal (REF4);
einen dritten Multiplikator (716) zum Multiplizieren der Quadraturkomponente, entsprechend der Inphasen-Komponente, die von dem Fokussierungsmittel ausgegeben wird, mit dem dritten Referenzsignal (REF3);
einen vierten Multiplikator (714) zum Multiplizieren der Quadraturkomponente mit dem vierten Referenzsignal (REF4);
einen Subtrahierer (718) zum Subtrahieren der Ausgabe von dem vierten Multiplikator von der Ausgabe der ersten Multiplikators, um ein Ausgabesignal zur Anwendung bei dem Addiermittel (71) zu erzeugen; und
einen Addierer (720) zum Addieren der Ausgaben des zweiten Multiplikators und des dritten Multiplikators, um ein Ausgabesignal zur Anwendung bei dem Addiermittel (72) zu erzeugen;
wobei das dritte und vierte Referenzsignal von der Form $\sin(-\omega_r m_{jk} T_s)$ respektive der Form $\cos(-\omega_r m_{jk} T_s)$ sind, wobei $\omega_r$ die Frequenz des ersten und zweiten Referenzsignals ist, $m_{jk}$ die Differenz in der Wegverzögerung für das Wandlerelement ist, für das die Kompensation angewandt wird und das Element, für das der Weg zu dem Fokuspunkt am kürzesten ist, und $T_s$ die Abtastperiode der Analog-Digital-Wandler ist.

**Revendications**

1. Système d'imagerie à ultrasons comprenant :

une pluralité d'éléments de transducteurs ultrasonores pour recevoir des signaux d'écho ultrasonores,
des moyens de transformation de fréquence (61, 62, 63, 64) pour transformer des signaux ($U_i$) provenant des éléments de transducteurs en des signaux de bande de base en phase et en quadrature ($I_{ij}$, $Q_{ij}$) en utilisant des premier et deuxième signaux de référence (REF1, REF2),
des moyens de focalisation (65, 66, 67, 68, 69) pour amener les signaux de bande de base provenant de tous les éléments de transducteurs en alignement temporel en éliminant les différences de retard de trajet des signaux ultrasonores,
des moyens de compensation de phase pour compenser les erreurs de phase dans les signaux de bande de base introduites par les moyens de transformation de fréquence,
des moyens d'addition pour additionner respectivement les composantes en phase et en quadrature délivrées par les moyens de compensation de phase, et
un détecteur d'enveloppe pour détecter des données d'enveloppe parmi les sorties des moyens d'addition,

dans lequel les moyens de compensation de phase comprennent :

un premier multiplieur (710) pour multiplier une composante en phase délivrée par les moyens de focalisation par un troisième signal de référence (REF3) ;

un deuxième multiplieur (712) pour multiplier ladite composante en phase avec un quatrième signal de référence (REF4) ;

un troisième multiplieur (716) pour multiplier la composante en quadrature, correspondant à ladite composante en phase, délivrée par les moyens de focalisation par le troisième signal de référence (REF3) ;

un quatrième multiplieur (714) pour multiplier ladite composante en quadrature par le quatrième signal de référence (REF4) ;

un soustracteur (718) pour soustraire la sortie du quatrième multiplieur de la sortie du premier multiplieur pour produire un signal de sortie pour application aux moyens d'addition (71) ; et

un additionneur (720) pour additionner les sorties du deuxième multiplieur et du troisième multiplieur pour produire un signal de sortie pour application aux moyens d'addition (72) ;

les troisième et quatrième signaux de référence ayant la forme $\sin(-\omega_r m_{jk} T_s)$ et la forme $\cos(-\omega_r m_{jk} T_s)$, respectivement, où $\omega_r$ est la fréquence des premier et deuxième signaux de référence, $m_{jk}$ est la différence du retard de trajet pour l'élément de transducteur pour lequel la compensation est appliquée et celui de l'élément pour lequel le trajet jusqu'au foyer est le plus court et $T_s$ est la période d'échantillonnage des convertisseurs analogique-numérique.

FIG. 1 (PRIOR ART)

PULSE GENERATOR ~11

OBJECT ~13

~12

14

SIGNAL PROCESSOR ~15

CRT ~16

.10

FIG. 2 (PRIOR ART)

~21

DLY1

20

DLY2

1
2
3

DLY3

FOCAL POINT

DLYj-1

j-1

DLYj

j+1

DLYj+1

22

Σ

23

ENVELOPE DETECTOR

n-1

n

DLYn-1

DLYn

# FIG. 3 (PRIOR ART)

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0224014 A
- US 4155259 A
- FR 2680250 A
- US 4290127 A

**Non-patent literature cited in the description**

- **TAI K. SONG et al.** A new Digital Phased Array System for Dynamic Focusing and Steering with Reduced Sampling Rate. *Ultrasonic Imaging,* January 1990, vol. 12 (1), 1-16